(19) Europäisches Patentamt
European Patent Office
Office européen des brevets

(11) **EP 3 969 767 B1**

(12) **EUROPEAN PATENT SPECIFICATION**

(45) Date of publication and mention
of the grant of the patent:
**07.08.2024  Bulletin 2024/32**

(21) Application number: **20742456.5**

(22) Date of filing: **14.05.2020**

(51) International Patent Classification (IPC):
**F16B 35/06** *(2006.01)*    **F16B 37/14** *(2006.01)*
**F16B 39/02** *(2006.01)*    **F16B 39/30** *(2006.01)*

(52) Cooperative Patent Classification (CPC):
**F16B 35/06; F16B 37/14; F16B 39/02;** F16B 39/30

(86) International application number:
**PCT/IB2020/054584**

(87) International publication number:
**WO 2020/230083 (19.11.2020 Gazette 2020/47)**

(54) **TIE BOLT AND PROCESS FOR MANUFACTURING A TIE BOLT**

ANKERBOLZEN UND VERFAHREN ZUR HERSTELLUNG EINES ANKERBOLZENS

BOULON D'ANCRAGE ET PROCÉDÉ DE FABRICATION D'UN BOULON D'ANCRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **14.05.2019  IT 201900006813**

(43) Date of publication of application:
**23.03.2022  Bulletin 2022/12**

(73) Proprietor: **Poggipolini S.p.A.**
**40068 San Lazzaro di Savena (IT)**

(72) Inventors:
• **POGGIPOLINI, Stefano**
**40068 San Lazzaro di Savena (BO) (IT)**
• **POGGIPOLINI, Michele**
**40068 San Lazzaro di Savena (BO) (IT)**
• **BUOSO, Giancarlo**
**40068 San Lazzaro di Savena (BO) (IT)**
• **RAVAGLIA, Simone**
**40068 San Lazzaro di Savena (BO) (IT)**

(74) Representative: **Studio Torta S.p.A. et al**
**Via Viotti, 9**
**10121 Torino (IT)**

(56) References cited:
JP-U- 3 057 009    US-A- 1 346 058
US-A- 2 985 898    US-A- 3 517 402
US-A- 3 611 862

**Description**

CROSS-REFERENCE TO RELATED APPLICATIONS

This patent application claims priority from Italian patent application no. 102019000006813 filed on 14/05/2019. 11

TECHNICAL FIELD

The present invention relates to a tie bolt and to a process for manufacturing such tie bolt.

In particular, the present invention relates to a tie bolt for automotive applications and a process for manufacturing a tie bolt of such type.

BACKGROUND ART

A tie bolt of the known type is a single body having a shank and a head, which protrudes at one end of said shank. The shank is substantially a cylindrical body having a longitudinal axis of rotation, while the tie bolt head can have different shapes according to the specific use. Generally, the head protrudes both axially and radially outside the shank. In particular, a tie bolt has a length, i.e. an extension along the rotation axis, significantly greater than its diameter. As is known, a tie bolt can have a length greater than 150 mm. For example, in the case of automotive applications, a tie bolt can have a length greater than 200 mm, preferably about 300 mm.

In more detail, the present invention relates to a special tie bolt, i.e. a tie bolt made of a material lighter than steel, highly performing for automotive applications. In particular, the present invention relates to a tie bolt made of a material with high mechanical strength, for example made of titanium alloy.

In the common practice, different problems are encountered for manufacturing tie bolts.

In fact, generally the head of a tie bolt is made by forging, using automatic molding machines. However, the automatic molding machines generally in use are unable to make tie bolts having a shank of sufficient length for manufacturing a tie bolt. In this case, therefore, a molding machine other than the standard design should be provided, in order to be able to make the tie bolts. This can be conceived mainly for tie bolts made of steel or other materials of common application, but it is not convenient for the production of special tie bolts, i.e. made of material with high mechanical resistance (for example made of titanium alloy) given the difficulties of processing due to the type of material and the low quantities of tie bolts which are generally commissioned.

Alternatively, a tie bolt can be made by using a semiautomatic press, however also in this case the process is particularly expensive and slow. However also in this case there is the drawback of having to use equipment designed ad hoc different from the standard.

A prior art tie bolt is disclosed e.g. in document JP 3057009U.

The problems indicated above increase when the tie bolt must be made of a material lighter than steel with high mechanical resistance, for example titanium and alloys thereof, due to the process specifications that these materials require.

DISCLOSURE OF INVENTION

The object of the present invention is to provide a process for manufacturing a tie bolt, in particular made of highly performing material, which allows the drawbacks mentioned above to be overcome.

The object of the present invention is to provide an improved tie bolt which allows the drawbacks described above to be overcome.

According to the present invention, a process is provided for manufacturing tie bolts as mentioned in the appended claims.

According to the present invention, a tie bolt of the improved type is provided as mentioned in the appended claims.

BRIEF DESCRIPTION OF THE DRAWINGS

The present invention will now be described with reference to the accompanying drawings, which illustrate some non-limiting embodiment examples, wherein:

- Figure 1 schematically shows a tie bolt according to the present invention;
- Figure 2 is an exploded view of Figure 1;
- Figure 3 shows, in section and on an enlarged scale, the detail III of Figure 1;
- Figures 4 and 5 are schematic views and show respective different embodiments of a threaded tightening between a nut and a shank coupled to one another for forming a tie bolt according to the present invention; and,
- Figure 6 is a block diagram for illustrating schematically some steps of a process according to the present invention.

BEST MODE FOR CARRYING OUT THE INVENTION

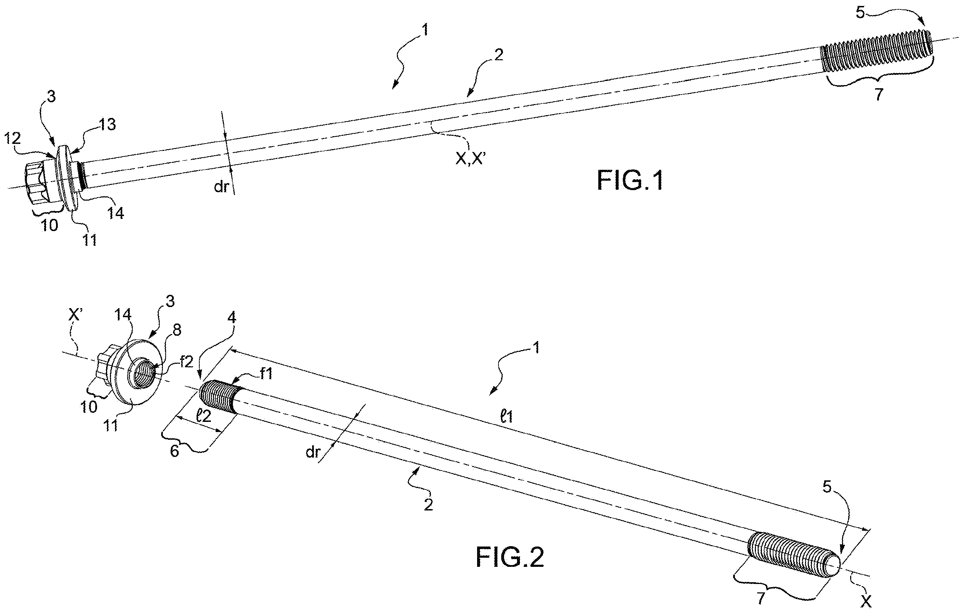

In Figure 1, reference numeral 1 indicates as a whole a tie bolt 1 according to the present invention.

Advantageously, the tie bolt 1 is particularly suitable for tightening bodies subjected to high dynamic stresses, i.e. vibrations. For example, the tie bolt 1 is configured for tightening components of a vehicle engine or in a turbine engine. In other words, the tie bolt 1 according to the present invention can find application for example in the automotive and aerospace sector. The tie bolt 1 is configured for tightening components in extreme temperature and vibrational conditions.

Advantageously, the tie bolt 1 is configured for withstanding high temperatures, in particular temperatures higher than the melting point of steel, such as for example temperatures higher than 1300 °C.

According to what illustrated in Figure 2, the tie bolt 1 comprises a shank 2 and a nut 3, i.e. two distinct bodies, which are tightened and locked together, as better illustrated below, so as to form a single body. In other words, the tie bolt 1 according to the present invention is not made in a single monolithic piece.

Advantageously, the shank 2 is made of a material with high mechanical strength. Advantageously, the shank 2 is made of a material chosen within the following group of materials: titanium, titanium alloys; nickel-chrome alloys generally known as INCONEL®; X1CrNiMoAlTi12-11-2 stainless steel generally known as MLX17®; X1NiCrMoAlTi12-10-2 stainless steel generally known as MLX19®; and stainless steel with a PH (Precipitation Hardening) class ranging from 13 to 8 or from 15 to 5 or from 17 to 4; steel with composition Si, 19.00-21.00 Cr, 33.00-37.00 Ni, 9.00-11.00 Mo, 1.00 max. Ti, 0.01 B, 1.00 max Fe, Bal Co generally known as MP35N®; steel comprising nickel and cobalt generally known as MARAGING® and/or VASCOMAX®, for example MARAGING300 or AERMET®100; AISI4340 and AFNOR30NiCrMo16 steel, and stainless steel of the AISI300 series and of the AISI400 series.

Advantageously, the nut 3 is made of a material with high mechanical strength. Advantageously, the nut 3 is made of a material chosen within the following group of materials: titanium, titanium alloys; nickel-chrome alloys generally known as INCONEL®; X1CrNiMoAlTi12-11-2 stainless steel generally known as MLX17®; X1NiCrMoAlTi12-10-2 stainless steel generally known as MLX19®; and stainless steel with a PH (Precipitation Hardening) class ranging from 13 to 8 or from 15 to 5 or from 17 to 4; steel with composition Si, 19.00-21.00 Cr, 33.00-37.00 Ni, 9.00-11.00 Mo, 1.00 max. Ti, 0.01 B, 1.00 max Fe, Bal Co generally known as MP35N®; steel comprising nickel and cobalt generally known as MARAGING® and/or VASCOMAX®, for example MARAGING300 or AERMET®100; AISI4340 and AFNOR30NiCrMo16 steel and of the AISI300 series and of the AISI400 series.

According to an embodiment, the shank 2 and the nut 3 are made of the same material.

According to a further embodiment, the shank 2 and the nut 3 are made of different materials. In this case, advantageously, it is possible to choose the material of the shank 2 and of the nut 3 according to the specific application. For example, it is possible to choose the material of the shank 2 and of the nut 3 according to the coefficient of friction that is desired, in order to guarantee the desired fixing. Or, it is possible to select the material of the shank 2 and of the nut 3 so as to use a lighter material for a component less stressed during use, for example for the nut 3, so as to obtain a tie bolt 1 which is lightened as much as possible and which allows at the same time the full tightening capacity.

For example the nut 3 is made of aluminum, or an alloy thereof, and the shank 2 is made of titanium, or an alloy thereof, in this case advantageously: the tie bolt 1 has a reduced weight (aluminum has a density lower than the density of titanium); the locking between shank 2 and nut 3 is safer since the coefficient of friction for aluminum on titanium (>0.4) is generally higher than the coefficient of friction for titanium on titanium (>0.3); the shank 2 made of titanium guarantees the mechanical resistance of the tie bolt 1 to vibrations and high temperatures.

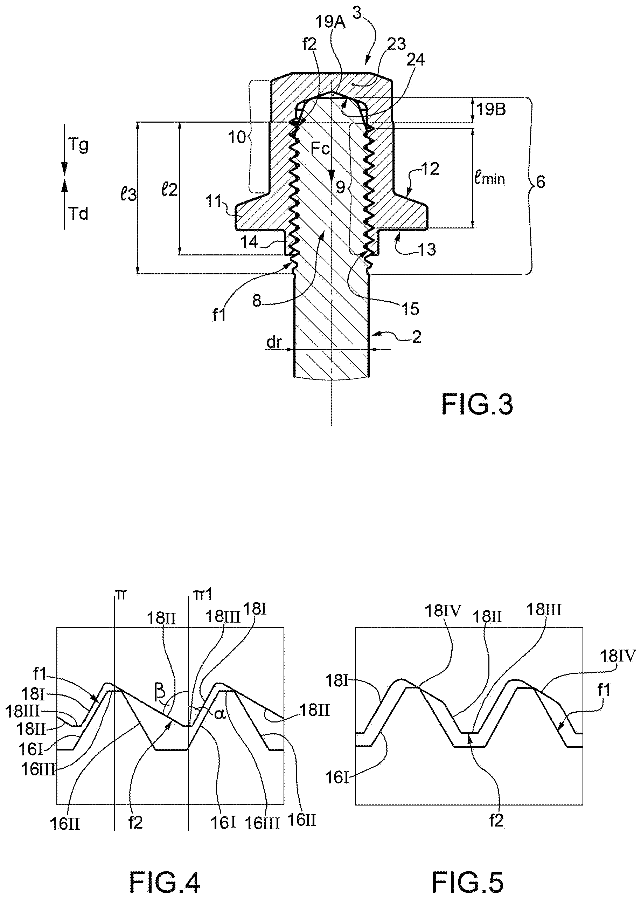

According to what shown in Figure 4, the shank 2 is an at least partially cylindrical body having a longitudinal axis of rotation X. The shank 2 has a head end 4, which is configured for coupling with the nut 3, and a foot end 5 opposite the head end 4. The shank 2 has a length l1, i.e. an extension along the longitudinal axis X of at least 150 mm.

Preferably, for automotive applications, the shank 2 has a length l1 greater than 200 mm, generally about 300 mm. According to the illustrated example, the shank 2 is a cylindrical body having a constant outer diameter dr along the entire length l1 thereof. According to a variant not shown, the shank 2 can have some portions with a different diameter (greater or smaller) than the outer diameter dr at the head end 4 and/or the foot end 5.

According to a variant not shown, the shank 2 can have a section with a different shape, for example with a polygonal profile.

Advantageously, the head end 4 has a threaded head portion 6.

According to the illustrated example, the shank 2 has a further threaded portion 7. In the illustrated example, the further threaded portion 7 is made at the foot end 5, therefore hereinafter it is identified as foot portion 7. According to a variant not shown, the further threaded portion 7 is made in a different position, for example in an intermediate position, of the shank 2.

The nut 3 has a longitudinal axis of rotation X and a cavity 8 substantially coaxial with said longitudinal axis X (Figures 2 and 3). The cavity 8 has an internal threaded portion 9 (shown in Figure 3).

Advantageously, the nut 3 and the shank 2 are configured so that the minimum length of the gripping thread is such that the yield strength Td of the nut 3 is substantially equal to the yield strength Tg of the shank 2.

The yield strength Td of the nut 3 is given by the following relationship:

$$Td = \sigma_d \frac{\pi}{4} (0{,}9 \times \emptyset_{nd})^{\wedge}2$$

wherein:

$\sigma_d$ is the yield stress of the material with which the nut 3 is made;

$\varnothing_{nd}$ is the nominal diameter of the thread f2 of the nut 3.

The yield strength Tg of the shank 2 is given by the following relationship:

$$Tg = \sigma_g \frac{\sin 30}{0,75 \times \pi \times \varnothing_{ng} \times l_{min}}$$

wherein:

$\sigma_g$ is the yield stress of the material with which the shank 2 is made;
$\varnothing_{ng}$ is the nominal diameter of the thread f1 of the shank 2.
$l_{min}$ is the minimum thread length f1 of the shank 2 gripping the nut 3.

It is known that the length of a thread is given by the following relationship:

$$l = p \times n_f$$

wherein:

p is the pitch of the thread, which according to the known art is the longitudinal distance between two consecutive threads of the same helix;
$n_f$ is the number of threads.

On the basis of the above formulas, once defined by the project, for example, the materials of the nut 3, of the shank 2 and the value of the nominal diameter $\varnothing_{ng}$ it is possible to determine the minimum length of the thread f1 coupled with the thread f2 of the nut 3.

According to the illustrated example, the nut 3 has an operating portion 10, which is configured for being engaged, in use, by a tool (not shown) to rotate the nut 3 around the longitudinal axis of rotation X.

According to the illustrated example, the nut 3 has a flange 11 which protrudes radially outside the operating portion 10. The flange 11 is substantially a thin body and has a head surface 12, which faces the operating portion 10, and an opposed foot surface 13. According to the illustrated example, the nut 3 has a collar 14 which protrudes axially from the foot surface 13 of the flange 11 and is coaxial with the longitudinal axis X'. According to the illustrated example, the collar 14 has a diameter greater than the diameter dr of the corresponding shank 2. According to the illustrated example, the cavity 8 faces the outside of the nut 3 through an opening 15 made at the collar 14.

Advantageously, the collar 14 allows centering and align the shank 2 with the nut 3. According to the illustrated example, the collar 14 is threaded internally. According to a variant not shown, the collar 14 is not threaded.

According to a further variant, not shown, the collar 14 has a seat sized so as to obtain a coupling with the head portion 6 with a hole basis -shaft basis type of precision, so as to provide for the alignment of the shank 2 with respect to the nut 3.

According to a variant not shown, the nut 3 can be devoid of the collar 14.

In addition or as an alternative to the above, the alignment between shank 2 and nut 3 can be obtained by means of the flange 11, which in this case is made in such a way to have a seat sized so as to obtain a coupling with the head portion 6 with a hole basis-shaft basis type of precision.

As shown in Figures 2 and 3, the nut 3 is dead.

In other words, the cavity 8 is not through, i.e. it faces the outside through a single opening 15.

As shown in Figure 3, the shank 2 is screwed into the cavity 8 so as to form the tie bolt 1.

As illustrated in detail in Figures from 3 to 5, the head portion 6 of the shank 2 has a thread f1 and the internal threaded portion 9 of the cavity 8 of the nut 3 has a thread f2.

The threads f1 and f2 are configured for coupling and tightening to one another. The threads f1 and f2 are self-locking. In other words, the thread f1 and the thread f2 are configured for generating, during the screwing between shank 2 and nut 3, a joint which opposes the unscrewing.

The cavity 8 has a housing 19A which is substantially, as shown in the figure, a bottom portion of the nut 3. The nut 3 is dead, i.e. it has a bottom wall 23 which is substantially transverse to the longitudinal axis X' and closes the cavity 8 so that the nut 3 is substantially a cup-shaped body. The head portion 6 has an end portion 19B which protrudes axially from the thread f1. The end portion 19B is configured for fitting inside the housing 19A.

The end portion 19B is placed in contact, in use, against the bottom wall 23. In this way, it is possible to obtain a pre-load force Fc, as better illustrated below, which will allow fitting the thread f1 with the thread f2, guaranteeing the locking.

The bottom wall 23 is delimited by a bottom surface 24 which faces the inside of the cavity 8. The bottom surface 24 is substantially conical and coaxial with the longitudinal axis.

Advantageously, the inclination of the bottom surface 24 with respect to the longitudinal axis allows adjusting the pre-load force according to the degree of screwing of the shank 2 inside the nut 3.

Advantageously, the inclination of the bottom surface 24 allows facilitating the alignment between the shank 2 and the nut 3.

The thread f1 and the thread f2 are chosen within a group comprising a plurality of pairs of self-locking profiles. Figures 4 and 5 show some examples of possible profiles of self-locking threads. It is noted that Figures 4 and 5, by way of example, show some known profiles of self-locking threads. According to some variants, not shown, the threads f1 and f2 can have different profiles.

According to the example shown in Figure 4, the thread f1 has two sides, hereinafter identified with side 16I and 16II connected to one another by a head fitting 16III, which according to the illustrated example is flat. The sides 16I and 16II are substantially mirror-like to each other, i.e. they have an equal and opposite inclination with respect to a plane π (illustrated with a dashed line in Figure 4) perpendicular to the longitudinal axis X.

Furthermore, the longitudinal extension of the sides 16I and 16II is substantially the same.

Whereas, the thread f2 is asymmetrical, i.e. the thread f2 has two sides, hereinafter identified with 18I and 18II, connected to oner another by a head fitting 18III, which according to the illustrated example is flat. The sides 18I and 18II have different inclinations with respect to a plane π1 (illustrated with a dotted line in figure 4) perpendicular to the longitudinal axis X'. Furthermore, the sides 18I and 18II have different longitudinal extensions. In more detail, the side 18I forms an angle α with the plane π1, while the side 18II forms an angle β with the plane π1. In particular, the angle α is smaller than the angle β.

Figure 5 shows a variant of a combination of the threads f1 and f2. According to the example illustrated in Figure 5, the thread f2 has a further fitting portion 18IV, which connects the side 18II with the adjacent side 18I. The portion 18IV is inclined with respect to the respective portion 18I and is configured for coming into contact and creating a shoulder, during use, for the thread f1.

In the examples illustrated in Figures 4 and 5, the thread f1 (male) is symmetrical and the thread f2 (female) is asymmetrical. According to a variant not shown, the thread f1 (male) is asymmetrical and the thread f2 (female) is symmetrical.

By providing threads f1 and f2 with self-locking profiles, once tightened on the shank 2, the nut 3 is indissolubly fixed to the shank 2 itself and forms a tie bolt 1, which behaves like a tie bolt 1 of known type manufactured in one piece.

The fact that the nut 3 is dead, i.e. it has the bottom wall 23, allows obtaining a pre-load force Fc between nut 3 and shank 2, which in particular acts on the threads f1 and f2 locking them to one another. The preload force Fc is the force resistant to the thrust exerted by the end portion 19B on the bottom wall 23 following the insertion and screwing of the head portion 6 inside the cavity 8.

According to a non-claimed variant, the thread f1 and the thread f2 can have normal profiles, i.e not self-locking. In this case, the shank 2 and the nut 3 are fixed to one another by interference. In particular, exploiting a hot/cold connection, as better illustrated below.

Advantageously, the fact that the shank 2 and the nut 3 are both made of titanium alloy increases the locking effect between nut 3 and shank 2. In fact, titanium has a static and dry coefficient of friction >0.3 (for example the static and dry coefficient of friction for Titanium Alloy Ti-6Al-4V (Grade 5) on Titanium Alloy Ti-6Al-4V (Grade 5) is about 0.36) this allows obtaining a particularly firm and resistant locking between the nut 3 and the shank 2. In other words, the fact that the nut 3 and the shank 2 are made of a titanium alloy increases the safety of the fixing of the components to one another.

Advantageously, the fact that the shank 2 and the nut 3 are made of different materials can allow increasing the locking effect between the two. For example, if the shank 2 is made of titanium and the nut 3 is made of aluminum, this allows obtaining a static and dry coefficient of friction > 0.4 (for example the static and dry coefficient of friction for Titanium Alloy Ti -6Al-4V (Grade 5) on Aluminum Alloy 6061-T6 is approximately 0.41).

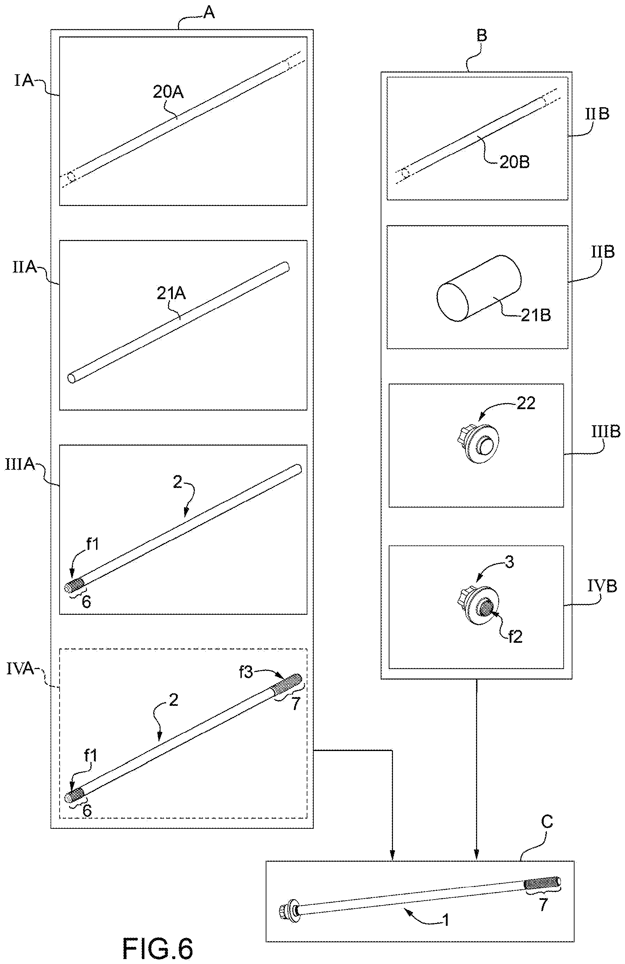

A process for manufacturing a tie bolt 1 according to the present invention is described here below, referring also to the block diagram illustrated in Figure 6.

The process involves a step of arranging a shank 2 (schematized with the block A) and a step of arranging a nut 3 (schematized with the block B). The process also involves a step of tightening, locking, the nut 3 to a threaded head portion 6 of the shank 2 (schematized with the block C).

The step of arranging a shank 2 and the step of arranging a nut 3 can be performed both simultaneously and in succession.

The step of arranging a shank 2 involves the sub-steps of:

- arranging a bar 20A of metallic material, in particular a high resistance metal (sub-block IA), advantageously the bar 20A is calibrated;
- obtaining, in particular by cutting, from the bar 20A a shank 21A with a predetermined length l1 (sub-block IIA), advantageously, the length l1 substantially corresponding to the length of the final shank 2; and
- making a thread f1 along the head portion 6 for obtaining the shank 2 (sub-block IIIA).

The step of arranging a nut 3 comprises the sub-steps of:

- arranging a bar 20B or wire (variant not shown) of metallic material, in particular a metal with high resistance (sub-block IB);
- obtaining, in particular by cutting, a shank 21B with a predetermined length (sub-block IIB); and
- forging the shank 21B, in particular by means of an automatic molding machine, so as to obtain a semi-finished product 22 substantially with the external shape of the nut 3 and having a cavity 8 (sub-block IIIB), advantageously the nut 3 is dead and has a bottom wall 23;
- making a thread f2 inside the cavity 8 for completing the construction of the nut 3 (sub-block IVB).

As previously mentioned, the manufacturing process also involves the tightening of the nut 3 on the shank 2. The tightening step can simply comprise the sub-step of screwing the nut 3 onto the head portion 6. In this case, the locking of the nut 3 on the portion 6 of the shank 2 is given by the interaction of the self-locking threads f1 and f2.

During the tightening step, the threads f1 and f2 are screwed so as to bring the bottom portion 19B into contact with the bottom surface 24 of the nut 3. During the tightening step, the threads f1 and f2 are screwed to one another so as to push the bottom portion 19B against the bottom surface 24, so as to generate a pre-load force Fc which acts on the shank 2 and ensures the tightening between the shank 2 and the nut 3. The pre-load force Fc is basically a function of the screwing level between the thread f1 and the thread f2.

Advantageously, the pre-load force Fc generated on the shank 2 is given by the inclination of the bottom surface 24 with respect to the longitudinal axis X' of the nut 3 (and consequently of the shank 2).

Optionally, the tightening step can involve a heat treatment step of the nut 3 and/or the shank 2. For example, the tightening step can involve heating the nut 3, so as to perform a coupling by hot/cold interference.

Optionally, according to the example shown in Figure 6, a further threaded portion 7 is realized on the shank 2 having a thread f3 (dashed IVA sub-block). According to the illustrated example, the further thread f3 is made along a foot portion 7.

According to a variant not shown, the thread f3 can be made after the step of tightening the nut 3 on the shank 2.

Advantageously, both the thread f1 and the thread f3 are made by rolling. Advantageously the nut 3 and the shank 2 are made of the same material and this for tribological attributes facilitates the locking by seizing, i.e. welding, of the thread f1 on the thread f2 by chemical affinities, especially with the titanium-based alloys.

In the illustrated examples, the thread f1 and the thread f2 are at a beginning.

The process of the type described above is simple and quick to implement and allows the use of machinery generally already in use by manufacturers of tightening components, such as screw manufacturers.

Advantageously, a tie bolt 1 of the type described above is made with significantly reduced costs and production time, compared to the tie bolts in a single piece and of a known type.

Advantageously, the tie bolt 1 of the type described above has a high fatigue resistance, in particular in the junction area between the shank 2 and the nut 3. Therefore, advantageously, a tie bolt 1 of the type described above can be used in environments highly stressed to vibrations, such as for example the engine base of a vehicle.

The tie bolt 1 of the type described above is resistant to high temperatures.

Advantageously, a tie bolt 1 of the type described above guarantees the same reliability and the same tightening properties of a monolithic tie bolt 1 of a known type.

Advantageously, the fact that the shank 2 and the nut 3 are made of different materials (for example shank 2 made of titanium alloy and nut 3 made of aluminum alloy) allows obtaining a tie bolt 1 which guarantees high performance and, at the same time, is lightened.

**Claims**

1. A process for manufacturing a tie bolt (1) comprising the steps of:

   - providing a shank (2) having a first longitudinal axis (X); said shank (2) having a head end (4) and a foot end (5); wherein said shank (2) has a first thread (f1) made along a first portion (6), in particular in the area of the head end (4); wherein said first portion (6) has an end portion (19B) which protrudes axially from the first thread (f1) ;
   - providing a nut (3) having a second longitudinal axis (X') and a cavity (8) facing outwards from an opening (15) of said nut (3); said nut (3) having a second thread (f2) made inside said cavity (8); said nut (3) has a bottom wall (23) which is delimited by a bottom surface (24) which faces the inside of said cavity (8); the bottom surface (24) is substantially conical and coaxial with said second longitudinal axis (X');
   - the first thread (f1) of said shank (2) and the second thread (f2) of said nut (3) have profiles which are configured to form a self-locking tightening;
   - tightening said nut (3) against the head end (4) of said shank (2), so as to screw said second thread (f2) around said first thread (f1);
   - wherein said tightening step involves screwing said first thread (f1) of said shank (2) and said second thread (f2) of said nut (3) to one another so as to cause said end portion (19B) to strike against said bottom surface (24) and generate, upon said shank (2), a predefined pre-load force (Fc) as a function of the level of screwing of the shank (2) with the nut (3) to form a single, indivisible, body.

2. A process according to Claim 1, wherein the step of providing the shank (2) and the step of providing the nut (3) can take place simultaneously or at least partially in succession; wherein, the shank (2) and the nut (3) are made of a high mechanical resistance material; in particular, the shank (2) and/or the nut (3) are made of a material chosen within the following group of materials: titanium, titanium alloys; nickel-chrome alloys; X1CrNiMoAlTi12-11-2 stainless steel; X1NiCrMoAlTi12-10-2 stainless steel; and stainless steel with a PH (Precipitation Hardening) class ranging from 13 to 8 or from 15 to 5 or from 17 to 4; steel with composition Si, 19.00-21.00 Cr, 33.00-37.00 Ni, 9.00-11.00 Mo, 1.00 max. Ti, 0.01 B, 1.00 max. Fe, Bal Co; steel comprising nickel and cobalt; AISI4340 and AISI304 steel and stainless steel of the AISI300 series and of the AISI400 series.

3. A process according to any of the preceding claims, wherein the step of providing a shank (2) comprises the sub-step of making said first thread (f1) along said first portion (6); wherein the step of providing a nut (3) comprises a sub-step of making said second thread (f2) inside said cavity (8).

4. A process according to any of the preceding claims, wherein the tightening step involves locking the nut (3) and the shank (2) to one another by means of an interference coupling, in particular a hot/cold coupling.

5. A process according to any of the preceding claims and comprising the further step of making a third thread (f3) along a respective further portion (7) of said shank (2) .

6. A tie bolt comprising a shank (2) having a first longitudinal axis (X); said shank (2) having a head end (4) and a foot end (5); wherein said shank (2) has a first thread (f1) made along a first portion (6) in the area of the head end (4); wherein said first portion (6) has an end portion (19B) which protrudes axially from the first thread (t1); said tie bolt (1) comprising a dead nut (3), having a second longitudinal axis (X') and a cavity (8) facing outwards from an opening (15) of said nut (3); said nut (3) having a second thread (f2) realized inside said cavity (8); wherein said nut (3) has a bottom wall (23) which is delimited by a bottom surface (24) which faces the inside of said cavity (8); the bottom surface (24) is substantially conical and coaxial with said second longitudinal axis (X'); the first thread (f1) of said shank (2) and the second thread (f2) of said nut (3) have profiles which are configured to form a self-locking tightening and are tightened, in use, to each other so that said end portion (19B) strikes against said bottom surface (24) and generates, upon said shank (2), a predefined pre-load force (Fc) which locks the nut (3) around said first end (6) to form an indivisible body.

7. A tie bolt according to Claim wherein the shank (2) and the nut (3) are fixed to one another by means of an interference coupling, in particular a hot/cold coupling.

8. A tie bolt according to any of the claims from 6 to 7, wherein the shank (2) and the nut (3) are made of a material chosen within the following group of materials: titanium, titanium alloys; nickel-chrome alloys; X1CrNiMoAlTi12-11-2 stainless steel; X1NiCrMoAlTi12-10-2 stainless steel; and stainless steel with a PH (Precipitation Hardening) class ranging from 13 to 8 or from 15 to 5 or from 17 to 4; steel with composition Si, 19.00-21.00 Cr, 33.00-37.00 Ni, 9.00-11.00 Mo, 1.00 max. Ti, 0.01 B, 1.00 max. Fe, Bal Co; steel comprising nickel and cobalt; AISI4340 and AISI304 steel and stainless steel of the AISI300 series and of the AISI400 series.

9. A tie bolt according to any of the claims from 6 to 8 and having a length (l1), namely an extension along said first longitudinal axis (X), greater than 160 mm.

**Patentansprüche**

1. Verfahren zur Herstellung eines Ankerbolzens (1), das die folgenden Schritte umfasst:

    - Bereitstellen eines Schafts (2) mit einer ersten Längsachse (X); wobei der Schaft (2) ein Kopfende (4) und ein Fußende (5) aufweist, wobei der Schaft (2) ein erstes Gewinde (f1) aufweist, das entlang eines ersten Abschnitts (6), insbesondere im Bereich des Kopfendes (4), hergestellt ist; wobei der erste Abschnitt (6) einen Endabschnitt (19B) aufweist, der axial von dem ersten Gewinde (f1) vorsteht;
    - Bereitstellen einer Mutter (3) mit einer zweiten Längsachse (X') und einem Hohlraum (8), der von einer Öffnung (15) der Mutter (3) nach außen gerichtet ist; wobei die Mutter (3) ein zweites Gewinde (f2) aufweist, das im Inneren des Hohlraums (8) ausgebildet ist; wobei die Mutter (3) eine Bodenwand (23) aufweist, die durch eine Bodenfläche (24) begrenzt ist, die dem Inneren des Hohlraums (8) zugewandt ist; wobei die Bodenfläche (24) im Wesentlichen konisch und koaxial zu der zweiten Längsachse (X') ist;
    - das erste Gewinde (f1) des Schaftes (2) und das zweite Gewinde (f2) der Mutter (3) haben Profile, die so gestaltet sind, dass sie eine selbstsichernde Verschraubung bilden;
    - Anziehen der Mutter (3) gegen das Kopfende (4) des Schaftes (2), um das zweite Gewinde (f2) um das erste Gewinde (f1) herum zu schrauben;
    - wobei der Schritt des Festziehens das Verschrauben des ersten Gewindes (f1) des Schafts (2) und des zweiten Gewindes (f2) der Mutter (3) miteinander beinhaltet, um zu bewirken, dass der Endabschnitt (19B) gegen die Bodenfläche (24) stößt und auf den Schaft (2) eine vordefinierte Vorspannkraft (Fc) als eine Funktion des Grads des Verschraubens des Schafts (2) mit der Mutter (3) erzeugt, um einen einzigen, unteilbaren Körper zu bilden.

2. Verfahren nach Anspruch 1, wobei der Schritt des Bereitstellens des Schaftes (2) und der Schritt des Bereitstellens der Mutter (3) gleichzeitig oder zumindest teilweise nacheinander erfolgen können; wobei der Schaft (2) und die Mutter (3) aus einem Material mit hoher mechanischer Festigkeit hergestellt sind, insbesondere sind der Schaft (2) und/oder die Mutter (3) aus einem Material hergestellt, das aus der folgenden Gruppe von Materialien ausgewählt ist: Titan, Titanlegierungen; Nickel-Chrom-Legierungen; rostfreier Stahl X1CrNiMoAlTi12-11-2; rostfreier Stahl X1NiCrMoAlTi12-10-2; und rostfreier Stahl mit einer PH-Klasse (Ausscheidungshärtung) von 13 bis 8 oder von 15 bis 5 oder von 17 bis 4; Stahl mit der Zusammensetzung Si, 19,00-21,00 Cr, 33,00-37,00 Ni, 9,00-11,00 Mo, 1,00 max. Ti, 0,01 B, 1,00 max. Fe, Bal Co; Stahl mit Nickel und Kobalt; Stahl AISI4340 und AISI304 sowie nichtrostende Stähle der Serien AISI300 und AISI400.

3. Verfahren nach einem der vorhergehenden Ansprüche, wobei der Schritt des Bereitstellens eines Schaftes (2) den Teilschritt des Herstellens des ersten Gewindes (f1) entlang des ersten Abschnitts (6) umfasst, wobei der Schritt des Bereitstellens einer Mutter (3) einen Teilschritt des Herstellens des zweiten Gewindes (f2) innerhalb des Hohlraums (8) umfasst.

4. Verfahren nach einem der vorangehenden Ansprüche, wobei der Schritt des Festziehens das Verriegeln der Mutter (3) und des Schaftes (2) miteinander mittels einer Interferenzkupplung, insbesondere einer Heiß/Kalt-Kupplung, beinhaltet.

5. Verfahren nach einem der vorangehenden Ansprüche und mit dem weiteren Schritt der Herstellung eines dritten Gewindes (f3) entlang eines jeweiligen weiteren Abschnitts (7) des Schafts (2).

6. Ankerbolzen mit einem Schaft (2), der eine erste Längsachse (X) aufweist, wobei der Schaft (2) ein Kopfende (4) und ein Fußende (5) aufweist, wobei der Schaft (2) ein erstes Gewinde (f1) aufweist, das entlang eines ersten Abschnitts (6) im Bereich des Kopfendes (4) hergestellt ist; wobei der erste Abschnitt (6) einen Endabschnitt (19B) aufweist, der axial aus dem ersten Gewinde (f1) herausragt; wobei der Ankerbolzen (1) eine Mutter (3) umfasst, die eine zweite Längsachse (X') und einen Hohlraum (8) aufweist, der von einer Öffnung (15) der Mutter (3) nach außen weist; wobei die Mutter (3) ein zweites Gewinde (f2) aufweist, das innerhalb des Hohlraums (8) realisiert ist; wobei die Mutter (3) eine Bodenwand (23) aufweist, die von einer Bodenfläche (24) begrenzt wird, die dem Inneren des Hohlraums (8) zugewandt ist; die Bodenfläche (24) ist im Wesentlichen konisch und koaxial mit der zweiten Längsachse (X'); das erste Gewinde (f1) des Schafts (2) und das zweite Gewinde (f2) der Mutter (3) Profile (25) aufweisen, die so konfiguriert sind, dass sie eine selbstsichernde Verschraubung bilden und im Gebrauch so miteinander verschraubt werden, dass der Endabschnitt (19B) gegen die Bodenfläche (24) stößt und auf den Schaft (2) eine vordefinierte Vorspannkraft (Fc) erzeugt, die die Mutter (3) um das erste Ende (6) herum verriegelt, um einen unteilbaren Körper zu bilden.

7. Ankerbolzen nach Anspruch 6, wobei der Schaft (2) und die Mutter (3) mittels einer Pressverbindung, insbesondere einer Heiß-Kalt-Kopplung, aneinander befestigt sind.

8. Ankerbolzen nach einem der Ansprüche 6 bis 7, wobei der Schaft (2) und die Mutter (3) aus einem Material bestehen, das aus der folgenden Gruppe von Materialien ausgewählt ist: Titan, Titanlegierungen; Nickel-Chrom-Legierungen; rostfreier Stahl X1CrNiMoAlTi12-11-2; rostfreier Stahl X1NiCrMoAlTi12-10-2; und rostfreier Stahl mit einer PH-Klasse (Ausscheidungshärtung) von 13 bis 8 oder von 15 bis 5 oder 20 von 17 bis 4; Stahl mit der Zusammensetzung Si, 19,00-21,00 Cr, 33,00-37,00 Ni, 9,00-11,00 Mo, 1,00 max. Ti, 0,01 B, 1,00 max. Fe, Bal Co; Stahl, der Nickel und Kobalt enthält; Stahl AISI4340 und AISI304 sowie nichtrostende Stähle der Serien AISI300 und AISI400.

9. Ankerbolzen nach einem der Ansprüche 6 bis 8 mit einer Länge (11), nämlich einer Ausdehnung entlang der ersten Längsachse (X), von mehr als 160 mm.

## Revendications

1. Procédé pour fabriquer un boulon d'ancrage (1) comprenant les faits de :

   - prévoir une tige (2) ayant un premier axe longitudinal (X) ; ladite tige (2) ayant une extrémité de tête (4) et une extrémité de pied (5) ; dans lequel ladite tige (2) a un premier filetage (f1) réalisé le long d'une première partie (6), en particulier dans la zone de l'extrémité de tête (4) ; dans lequel ladite première partie (6) a une partie d'extrémité (19B) qui fait axialement saillie à partir du premier filetage (f1) ;
   - prévoir un écrou (3) ayant un deuxième axe longitudinal (X') et une cavité (8) orientée vers l'extérieur à partir d'une ouverture (15) dudit écrou (3) ; ledit écrou (3) ayant un deuxième filetage (f2) réalisé à l'intérieur de ladite cavité (8) ; ledit écrou (3) a une paroi inférieure (23) qui est délimitée par une surface inférieure (24) qui fait face à l'intérieur de ladite cavité (8) ; la surface inférieure (24) est sensiblement conique et coaxiale avec ledit deuxième axe longitudinal (X') ;

- le premier filetage (f1) de ladite tige (2) et le deuxième filetage (f2) dudit écrou (3) ont des profils qui sont configurés pour former un serrage autobloquant ;

- serrer ledit écrou (3) contre l'extrémité de tête (4) de ladite tige (2), afin de visser ledit deuxième filetage (f2) autour dudit premier filetage (f1) ;

- dans lequel ladite étape de serrage implique le vissage dudit premier filetage (f1) de ladite tige (2) et dudit deuxième filetage (f2) dudit écrou (3) l'un avec l'autre afin d'amener ladite partie d'extrémité (19B) à frapper contre ladite surface inférieure (24) et générer, sur ladite tige (2), une force de précharge (Fc) prédéfinie en fonction du niveau de vissage de la tige (2) avec l'écrou (3) afin de former un seul corps indivisible.

2. Procédé selon la revendication 1, dans lequel l'étape de fourniture de la tige (2) et l'étape de fourniture de l'écrou (3) peuvent avoir lieu simultanément ou au moins partiellement en succession ; dans lequel la tige (2) et l'écrou (3) sont réalisés avec un matériau à haute résistance mécanique ; en particulier, la tige (2) et/ou l'écrou (3) sont réalisés avec un matériau choisi dans le groupe de matériaux suivant : le titane, les alliages de titane ; les alliages de nickel-chrome ; l'acier inoxydable X1CrNiMoAlTi12-11-2 ; l'acier inoxydable X1NiCrMoAlTi12-10-2 ; et l'acier inoxydable avec une classe de PH (durcissement par précipitation) de 13 à 8 ou de 15 à 5 ou de 17 à 4 ; l'acier avec la composition Si, 19,00-21,00 Cr, 33,00-37,00 Ni, 9,00-11,00 Mo, 1,00 maximum de Ti, 0,01 B, 1,00 maximum de Fe, Bal Co ; l'acier comprenant du nickel et du cobalt ; l'acier AISI4340 et AISI304 et l'acier inoxydable de la série AISI300 et de la série AISI400.

3. Procédé selon l'une quelconque des revendications précédentes, dans lequel l'étape de fourniture de la tige (2) comprend la sous-étape de réalisation dudit premier filetage (f1) le long de ladite première partie (6) ; dans lequel l'étape de fourniture de l'écrou (3) comprend une sous-étape de réalisation dudit deuxième filetage (f2) à l'intérieur de ladite cavité (8).

4. Procédé selon l'une quelconque des revendications précédentes, dans lequel l'étape de serrage implique le blocage de l'écrou (3) et de la tige (2) l'un avec l'autre au moyen d'un couplage par interférence, en particulier un couplage à chaud/à froid.

5. Procédé selon l'une quelconque des revendications précédentes et comprend l'étape supplémentaire de réalisation d'un troisième filetage (f3) le long d'une autre partie (7) respective de ladite tige (2).

6. Boulon d'ancrage comprenant une tige (2) ayant un premier axe longitudinal (X) ; ladite tige (2) ayant une extrémité de tête (4) et une extrémité de pied (5) ; dans lequel ladite tige (2) a un premier filetage (f1) réalisé le long d'une première partie (6) dans la zone de l'extrémité de tête (4) ; dans lequel ladite première partie (6) a une partie d'extrémité (19B) qui fait axialement saillie à partir du premier filetage (f1) ; ledit boulon d'ancrage (1) comprenant un écrou fixe (3), ayant un deuxième axe longitudinal (X') et une cavité (8) orientée vers l'extérieur à partir d'une ouverture (15) dudit écrou (3) ; ledit écrou (3) ayant un deuxième filetage (f2) réalisé à l'intérieur de ladite cavité (8) ; dans lequel ledit écrou (3) a une paroi inférieure (23) qui est délimitée par une surface inférieure (24) qui fait face à l'intérieur de ladite cavité (8) ; la surface inférieure (24) est sensiblement conique et coaxiale avec ledit deuxième axe longitudinal (X') ; le premier filetage (f1) de ladite tige (2) et le deuxième filetage (f2) dudit écrou (3) ont des profils qui sont configurés afin de former un serrage autobloquant et sont serrés, à l'usage, l'un par rapport à l'autre de sorte que ladite partie d'extrémité (19B) frappe contre ladite surface inférieure (24) et génère, sur ladite tige (2), une force de précharge (Fc) prédéfinie qui bloque l'écrou (3) autour de ladite première extrémité (6) afin de former un corps indivisible.

7. Boulon d'ancrage selon la revendication 6, dans lequel la tige (2) et l'écrou (3) sont fixés l'un par rapport à l'autre au moyen d'un couplage par interférence, en particulier un couplage à chaud/à froid.

8. Boulon d'ancrage selon l'une quelconque des revendications 6 à 7, dans lequel la tige (2) et l'écrou (3) sont réalisés avec un matériau choisi dans le groupe de matériaux suivant : le titane, les alliages de titane ; les alliages de nickel-chrome ; l'acier inoxydable X1CrNiMoAlTi12-11-2 ; l'acier inoxydable X1NiCrMoAlTi12-10-2 ; et l'acier inoxydable avec une classe de PH (durcissement par précipitation) de 13 à 8 ou de 15 à 5 ou de 17 à 4 ; l'acier avec la composition Si, 19,00-21,00 Cr, 33,00-37,00 Ni, 9,00-11,00 Mo, 1,00 maximum de Ti, 0,01 B, 1,00 maximum de Fe, Bal Co ; l'acier comprenant du nickel et du cobalt ; l'acier AISI4340 et AISI304 et l'acier inoxydable de la série AISI300 et de la série AISI400.

9. Boulon d'ancrage selon l'une quelconque des revendications 6 à 8 et ayant une longueur (11), à savoir une extension le long dudit premier axe longitudinal (X), supérieure à 160 mm.

FIG.1

FIG.2

EP 3 969 767 B1

FIG.3

FIG.4

FIG.5

A

IA

20A

IIA

21A

IIIA

2

f1

6

IVA

f3

7

2

f1

6

B

IIB

20B

IIB

21B

IIIB

22

IVB

3

f2

C

7

1

7

## FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102019000006813

- JP 3057009 U